# EUROPEAN PATENT SPECIFICATION

(11) **EP 1 619 130 B1**
(45) Date of publication and mention of the grant of the patent: **09.09.2015**
(21) Application number: 03780810.2
(22) Date of filing: 16.12.2003
(51) Int. Cl.: B65D 1/40, G01N 1/10, G01N 35/02

(54) **LIQUID STORAGE CONTAINER AND CARTRIDGE**
FLÜSSIGKEITSLAGERBEHÄLTER UND ANALYSEKASSETTE
RECIPIENT ET CARTOUCHE DE STOCKAGE DE LIQUIDE

(30) Priority: 20.12.2002 JP 2002370929
(43) Date of publication of application: 25.01.2006
(73) Proprietor: ARKRAY, Inc., Minami-ku Kyoto-shi Kyoto 601-8045 (JP)
(72) Inventor: TAKADA, Hiroyuki c/o ARKRAY FACTORY Inc., Koka-gun, Shiga 520-3306 (JP); TAKAHATA, Ichiro c/o ARKRAY FACTORY Inc., Koka-gun, Shiga 520-3306 (JP)
(74) Representative: Jones, Elizabeth Louise
(86) International application number: PCT/JP2003/016133
(87) International publication number: WO 2004/056665

(56) References cited:
- EP-A- 0 714 021
- JP-A- 06 298 229
- JP-A- 08 295 312
- JP-A- 09 156 624
- JP-A- 2001 318 101
- JP-A- 2001 349 896
- JP-U- 3 052 950
- JP-U- 01 088 807

## Description

### TECHNICAL FIELD

The present invention relates to a liquid storage container for containing liquid and a cartridge including a storage well holding liquid.

### BACKGROUND ART

An example of cartridge includes a disposable cartridge for immunoassay (refer to JP-A-2001-318101 for example). As shown in Fig. 12, a cartridge 8 includes a plurality of wells 80-84each encapsulating a respective reagent 80a-84a necessary for immunoassay. The cartridge 8 also includes a plurality of cells 85-87 for optical check after reaction of the reagent with a sample. The cartridge 8 utilizes a reagent such as latex dispersion liquid. The latex dispersion liquid is made by dispersing an immune reactant, which reacts selectively with a specific component in the sample, in liquid as supported on by latex particles. The wells 80-84 and the cells 85-87 include upper openings 80b-87b which are closed by a seal 88, so that the reagents 80a-84a are prevented from spilling out when preserved. The reagents 80a-84a in the cartridge 8 are all liquid. A pipette nozzle pierces the seal 88 and is inserted into the wells 80-84 to take out the reagents 80a-84a.

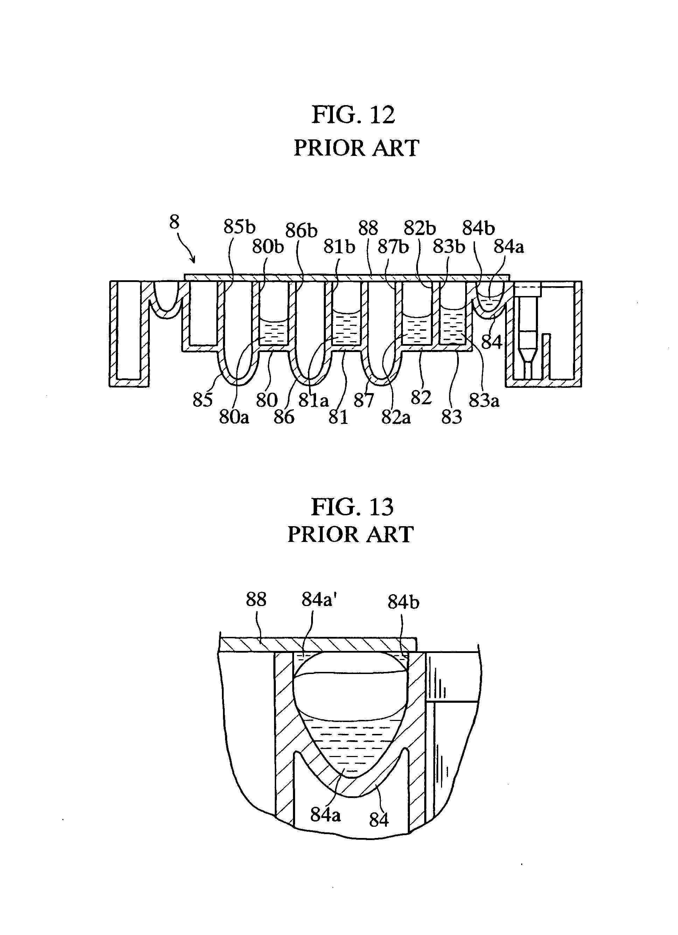

The cartridge 8 is generally stored or transferred in a manner such that the seal 88 is placed at the upside. However, a user may turn the cartridge upside down, or a shock or oscillation may be applied during transfer, so that the liquid surfaces of the reagents 80a-84a may be ruffled. In such an instance, as shown in Fig. 13 illustrating the well 84 for example, the reagent 84a may adhere to the seal 88 or to a peripheral portion of the upper opening 84b. The adhering reagent 84a' may be removed by falling freely, but may also keep adhering to the seal 88 due to the surface tension of the reagent 84a' . As the adhering reagent 84a' cannot be easily taken out by the pipette nozzle, an usable amount of the reagent 84a' is substantially reduced once the reagent adheres as above-described. Therefore, considering the adhesion of the reagents 80a-84a, the amount of the reagents 80a-84a to be supplied in the wells 80-84 needs to be determined by adding a maximum amount of the reagents 80a-84a that may adhere. However, the reagent such as the latex dispersion liquid is so expensive that the amount used must be minimized in order to reduce the product cost.

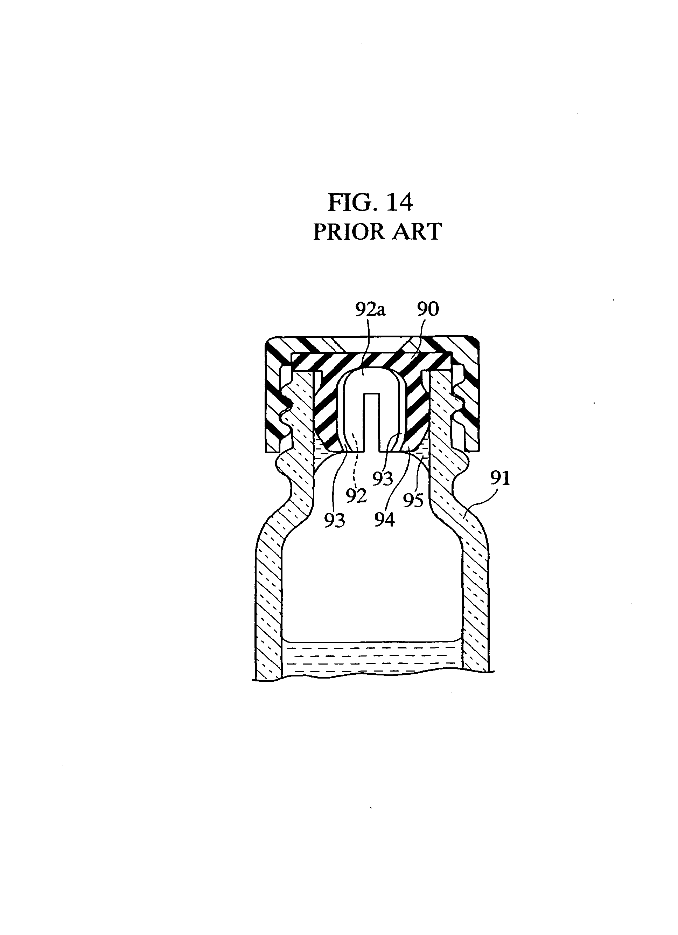

As one solution to the above-described problem, as shown in Fig. 14, a medicine bottle 91 is provided with a stopper 90 which can be repeatedly pierced by a needle. The stopper 90 includes a hollow portion in which a space 92 has a top portion 92a whose peripheral portion is prevented from adhesion of medicinal liquid (refer to JP-A-2002-535213 for example). In this prior art, the stopper 90 is provided with grooves 93 extending vertically for overcoming the surface tension of the medicinal liquid which adheres to the periphery of the top portion 92a, thereby returning the medicinal liquid back to the medicine bottle 91. However, when using the illustrated stopper 90, the medicinal liquid 95 may adhere to the portion between an end 94 of the stopper 90 and the medicine bottle 91. Further, as the above-described cartridge 8 (see Fig. 12) needs not be repeatedly pierced by a needle, the use of the stopper 90 is disadvantage in view of cost.

### DISCLOSURE OF THE INVENTION

An object of the present invention is to prevent, advantageously in view of cost, loss of usable liquid contained in a container in which the liquid keeps adhering to undesirable portions. For example, a cartridge for containing a reagent is required to be initially filled with a reduced amount of reagent, thereby preventing an increase of the product cost.

A first aspect of the present invention provides a liquid storage container comprising: a receptacle formed with an upper opening, and a closure for closing the upper opening; and a liquid contained in the receptacle; wherein the receptacle is provided with an adhering liquid mover for moving the liquid, which adheres on a peripheral portion of the upper opening or on an inner surface of the receptacle, toward a bottom of the receptacle, wherein the closure comprises a sheet, and wherein the adhering liquid mover comprises a notch formed on the inner surface of the receptacle in a manner such that a lower end of the adhering liquid mover is positioned below a surface of the liquid contained in the receptacle.

There is also disclosed herein a cartridge comprising: at least one storage well including an upper opening and containing a liquid; at least one reaction well including an upper opening and providing a reacting field;
and a closure for closing at least the upper opening of the storage well, wherein at least one of the storage well and the reaction well is provided with an adhering liquid mover which downwardly moves the liquid which adheres on a peripheral portion of the upper opening of the well or at an inner surface of the well.

Preferably, the liquid to be contained in the container of the liquid storage container or in the storage well of the cartridge comprises at least one of a reagent, a diluent, and a cleaning solution.

Preferably, the reagent is necessary for causing immune reaction, and typically, the reagent is made by dispersing an immune reactant, which reacts selectively with a specific component in a sample, in liquid, as supported on solid particles.

Preferably, there are a plurality of storage wells, and the closure, which comprises a sheet, collectively covers the upper openings of the storage wells. The sheet may cover the upper openings of at least two wells including the one or more storage well, out of the storage well and the reaction well.

The adhering liquid mover is provided on the inner surface of the receptacle of the liquid storage container, preferably on the inner surface of the storage well, and preferably on the inner surface of the reaction well of the cartridge.

The adhering liquid mover comprises a notch, or preferably, a groove which is V-shaped in section. The adhering liquid mover may also be formed semicircular in section or rectangular in section, or may be formed as a protrusion.

Preferably, the adhering liquid mover extends linearly, vertically, or spirally. Of course, the adhering liquid mover may extend obliquely.

Preferably, the adhering liquidmover is formed in a manner such that an upper end of the moving means contacts the closure. On the other hand, the adhering liquid mover is formed in the receptacle of the liquid storage container or in at least one of the storage well and the reaction well of the cartridge, in a manner such that a lower end of the moving means is positioned below.a surface of the liquid when the container contains a desired amount of the liquid. Note that the adhering liquid mover is preferably formed such that the lower end does not contact the bottom surface of the container or of at least one of the well. Due to this structure, the adhering liquid is prevented from remaining at the moving means when the liquid is taken out by a nozzle.

Preferably, the adhering liquid mover is formed by resin molding integrally with the receptacle of the liquid storage container or with at least one of the storage well and the reaction well of the cartridge.

### BRIEF DESCRIPTION OF THE DRAWINGS

Fig. 1 is a front view illustrating an example of a cartridge according to the present invention.
Fig. 2 is a vertical sectional view illustrating the cartridge of Fig. 1.
Fig. 3 illustrates the cartridge of Fig. 1 in an exploded perspective view and in an enlarged plan view.
Fig. 4 is a sectional view taken along lines IV-IV in Fig. 1.
Fig. 5 is a sectional view similar to Fig. 4, illustrating the function of grooves formed in a storage well of the cartridge.
Fig. 6 is a sectional view similar to Fig. 2, illustrating an example of measuring procedure utilizing the cartridge shown in Figs. 1-3.
Fig. 7 is a sectional view similar to Fig. 2, illustrating an example of measuring procedure utilizing the cartridge shown in Figs. 1-3.
Fig. 8 is a sectional view similar to Fig. 2, illustrating an example of measuring procedure utilizing the cartridge shown in Figs. 1-3.
Fig. 9 is a sectional view similar to Fig. 2, illustrating an example of measuring procedure utilizing the cartridge shown in Figs. 1-3.
Fig. 10 is an enlarged plan view showing a principal part of the cartridge for illustrating another example of adhering liquid mover.
Fig. 11A is an enlarged plan view showing a principal part of the cartridge for illustrating still another example of adhering liquidmover, and Fig. 11B is a sectional view similar to Fig. 4, illustrating the adhering liquid mover shown in Fig. 11A.
Fig. 12 is a sectional view illustrating an example of a conventional cartridge.
Fig. 13 is an enlarged view illustrating a principal part of Fig. 12.
Fig. 14 is a sectional view illustrating a prior art method for removing adhering liquid.

### BEST MODE FOR CARRYING OUT THE INVENTION

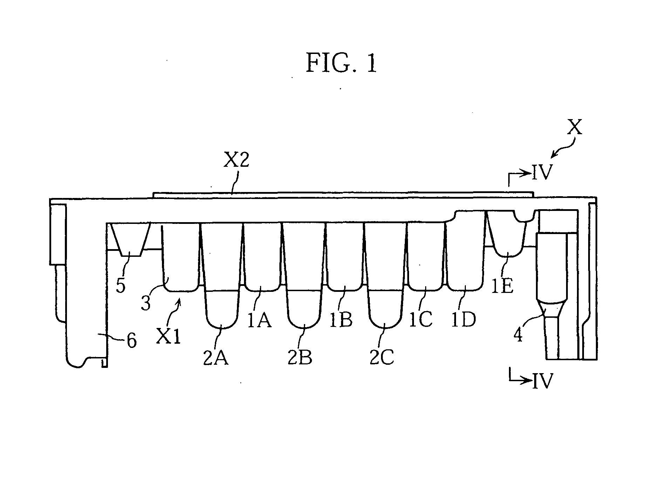

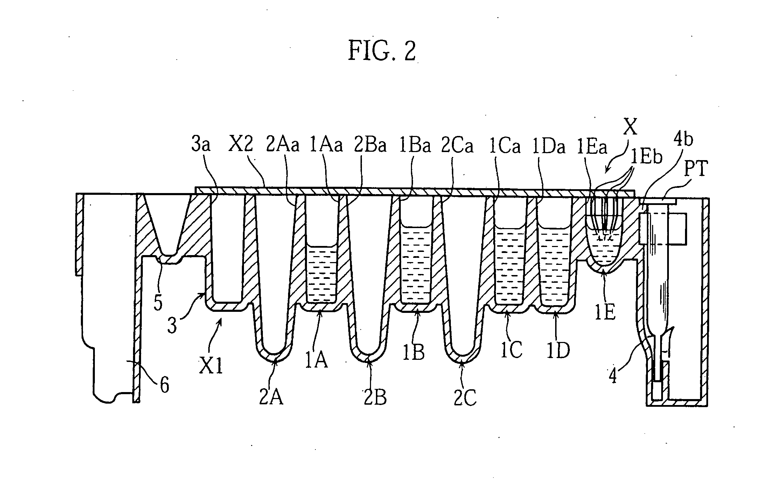

Figs. 1-3 illustrate a cartridge X usable for measuring the concentration of a target component in blood by latex agglutination. The cartridge is set in a measuring instrument to cause a desired reaction. The cartridge X, which is disposable, includes a receptacle body X1 and a sealing member X2 fitted to the body X1.

The receptacle body X1 includes a plurality of storage wells 1A-1E, a plurality of reaction wells 2A-2C, a adjustment well 3, disposal well 4, a sample well 5, and a cuvette 6. The body X1 is formed to be entirely transparent by molding using a transparent resin. Note that the body X1 needs not necessarily be entirely transparent, if at least the reaction wells 2A-2C are transparent. The number, position and form of each of the wells 1A-1E, 2A-2C, 3-5 and the cuvette 6 are not limited to the illustrated example, but may be selected depending on the measurement target and measuring methods.

The storage wells 1A-1E contain reagents and so on (e.g. reagent, diluent, or cleaning liquid) necessary for measurement, and include upper openings 1Aa-1Ea.

The storage well 1A contains a hemoglobin measuring reagent. The hemoglobin measuring reagent is used for measuring the concentration of hemoglobin in red blood cells, and any of various known reagents can be used if it reacts with hemoglobin to enable colorimetric measurement after the reaction. The hemoglobin concentration is measured for calculating the hematocrit value (volume percentage of red blood cells in blood) based on the hemoglobin concentration, and for compensating for the influence of the hematocrit value on measurement.

The storage well 1B contains a hemolytic dilute solution. The hemolytic dilute solution is used for destructing blood cells to measure the components contained in the blood cells. An example may be a physiological saline solution containing saponin.

The storage well 1C contains an inert liquid usable as a diluent or cleaning solution. Any kind of inert liquid can be used if it does not hinder hemoglobin reaction or immune reaction of the measurement target and does not cause errors in light absorbance measurement of hemoglobin and the measurement target. An example may be a physiological saline solution or cattle serum albumin.

The storage well 1D contains a cleaning liquid. The cleaning liquid, which is distilled water in the present embodiment, is used for cleaning a pipette tip. Of course, other liquid than distilled water may be used as the cleaning liquid.

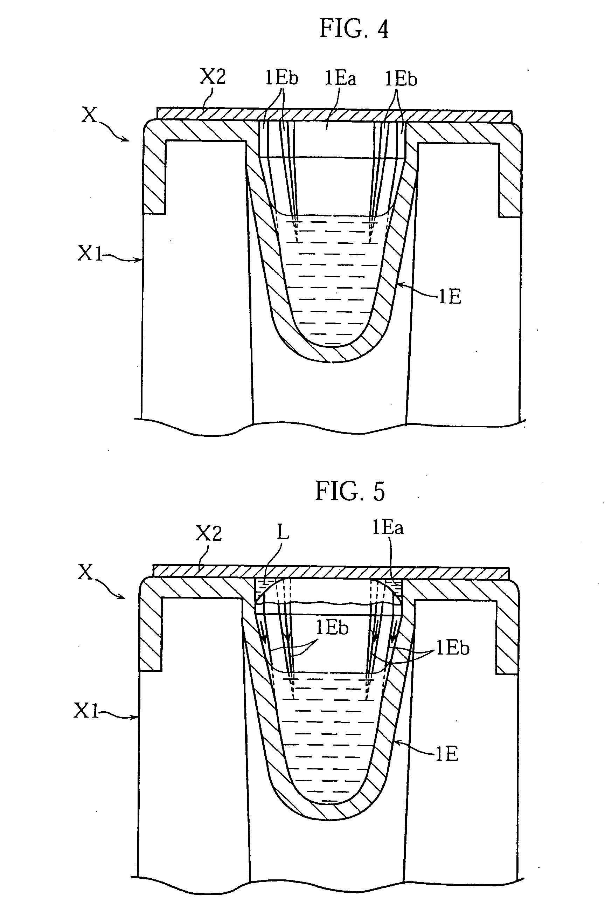

The storage well 1E is formed with a plurality of grooves 1Eb and contains a latex suspension. Each of the grooves 1Eb is V-shaped in section and extends vertically on the storage well 1E to serve as a adhering liquid mover. The groove 1Eb can be formed at the inner surface of the storage well 1E when forming the storage well 1E by molding. As well shown in Fig. 4, the groove 1Eb contacts the sealing member X2 at the upper end, while contacting the latex suspension at the lower end positioned below the surface of the latex suspension. With such an arrangement, as shown in Fig. 5, the groove 1Eb overcomes the surface tension of the latex suspension deposited on the vicinity of the upper opening 1Ea and on the sealing member X2, and causes the depositing latex suspension to drop along the groove 1Eb. In this way, it is possible to prevent unexpected loss of the available latex suspension, thereby minimizing the amount of the latex suspension to be supplied to the storage well 1E. As a result, a necessary amount of latex suspension is reduced to lower the product cost.

The latex suspension may be prepared by dispersing an immune reactant, which reacts specifically to the measurement target component, in a buffer solution as supported on latex particles. Examples of the measurement target component include disease markers such as hepatitis virus, rheumatoid factor, C-reactive protein, hemolytic streptococcal toxin, and various enzymes. The immune reactant may be selected according to the types of the measurement target. The immune reactant provides a specific antigen-antibody reaction with the above-described disease markers to agglutinate. An example of latex particles includes latex beads of polystyren.

As shown in Figs. 1-3, each of the reaction wells 2A-2C includes a respective upper opening 2Aa-2Ca. The reaction well 2A is used for preparing a mixture liquid of diluted blood and the hemoglobin measuring reagent and for measuring the light absorbance of the mixture. In other words, the reaction well 2A is used for measuring the light absorbance necessary for calculating the hemoglobin concentration. The reaction well 2B is used for causing a latex agglutination reaction followed by measurement of the light absorbance. The reaction well 2C may be used either for measuring a target component different from that contained in the reaction well 2B by causing an immune reaction different from that occurring in the reaction well 2B followed by measurement of the light absorbance, or for confirming the measurement repeatability by causing the same immune reaction as the reaction well 2B followed by measurement of the light absorbance.

The adjustment well 3 is used for controlling blood and includes an upper opening 3A. The adjustment of blood may be performed by diluting the blood with the physiological saline solution contained in the storage well 1C, for example.

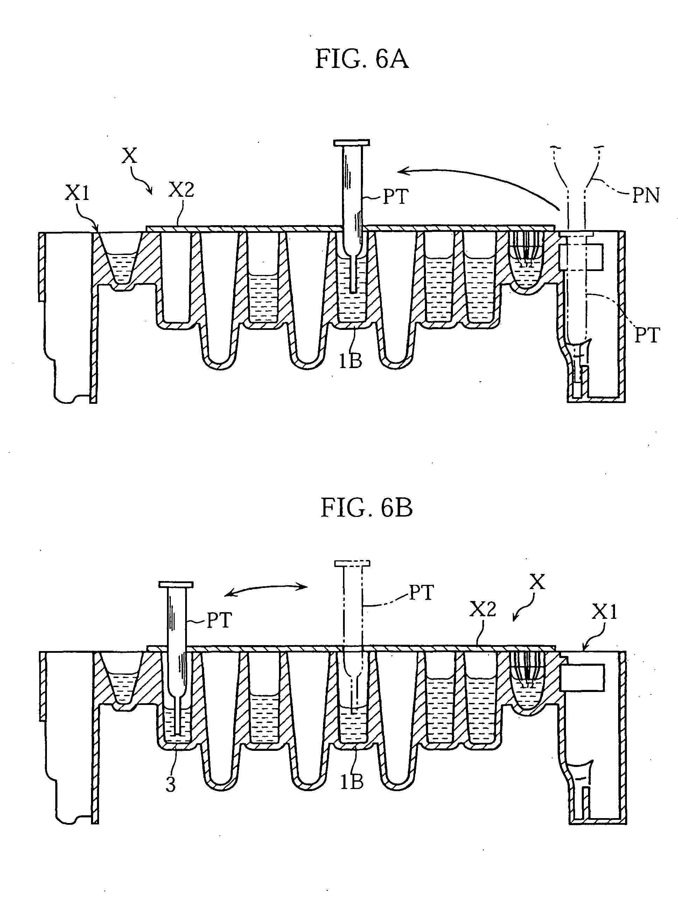

The disposal well 4 is utilized for holding a pipette tip PT before use of the cartridge X. The disposal well is also used for disposing an unnecessary portion of liquid when using the cartridge X. The disposal well 4 includes an upper opening 4a and a shoulder 4b for engaging the pipette tip PT. In use, the pipette tip PT is attached to a pipette nozzle PN (see Fig. 6A) for pipetting (sucking and discharging of liquid using the pipette nozzle).

The sample well 5 is used for directly injecting the blood into the body X1. The cuvette 6 is used for setting a commercially available small tube containing blood to the cartridge X. Selection between the sample well 5 and the cuvette 6 depends on the structure of the measuring instrument or on the choice by the user. In the latter case, the measuring instrument may be designed to change in operational sequence for enabling measurement regardless of which of the sample well 5 and the cuvette 6 is selected for measurement. Further, the user operates the measuring instrument using e.g. a control button so that the measuring instrument is able to distinguish which of the sample well 5 and the cuvette 6 is used.

The sealing member X2 collectively seals the upper openings 1Aa-1Ea, 2Aa-2Ca and 3a of the wells 1A-1E, 2A-2C and 3 except the upper opening of the disposal well 4. However, the disposal well 4 may also be sealed together by the sealing member X2. The sealing member X2 is made of a metal foil such as aluminum foil or of a resin film, and can be easily pierced by the pipette tip. The sealing member X2 is fitted to the body X1 by using a hot-melt adhesive or by heat sealing.

As described above, the cartridge X is attached to the measuring instrument for use. An example of measurement procedure utilizing the cartridge X is described below referring to Figs. 6-9.

First, whole blood is supplied to the sample well 5 or to the cuvette 6 of the cartridge X, and then the cartridge X is attached to the measuring instrument (not shown). It should be noted that Figs. 6-9 illustrate an example where the sample well 5 holds the blood, and the following description is given with respect to the example wherein whole blood is held in the sample well 5.

The measuring instrument recognizes the attachment of the cartridge X based on a user's operation or automatically, for starting the measurement process. The measurement process includes the concentration measurement of hemoglobin and of the measurement target component.

As shown in Fig. 6A, the pipette tip PT is attached to the pipette nozzle PN before measurement. Specifically, the pipette nozzle PN of the measuring instrument is moved, and the pipette tip PT held in the disposal well 4 of the cartridge X is attached to the pipette nozzle PN.

Next, measurement of the hemoglobin concentration is performed. The hemoglobin concentration measurement includes adjustment of sample, absorbance measurement, and calculation of the hemoglobin concentration (hematocrit value).

As shown in Figs. 6A and 6B, in the sample adjustment, the physiological saline solution in the storage well 1B is pippetted for dispensing into the adjustment well 3. The physiological saline solution is pipetted twice each by an amount of e.g. 95µL for dispensing a total amount of 190µL into the adjustment well 3.

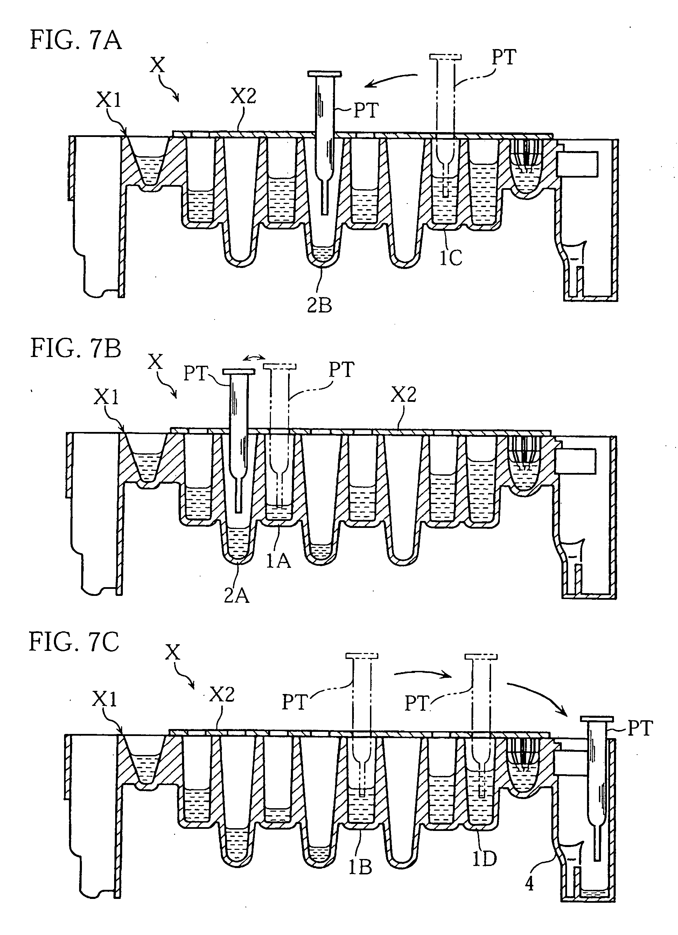

Thereafter, as shown in Fig. 7A, the inert liquid in the storage well 1C is dispensed into the reaction well 2B. The inert liquid is pipetted once by amount of e.g. 84µL for dispensing into the reaction well 2B. Then, as shown in Fig. 7B, the hemoglobin measuring reagent in the storage well 1A is dispensed into the reaction well 2A. The hemoglobin measuring reagent is pipetted twice each by an amount of e.g. 77µL for dispensing a total amount of 154µL into the reaction well 2A. Subsequently, the pipette tip PT is cleaned according to the steps shown in Fig. 7C. Specifically, the pipette tip PT is cleaned by sucking and discharging the physiological saline solution in the storage well 1B twice each by an amount of e.g. 110µL, followed by transferring 50µL of distilled water from the storage well 1D to the disposal well 4.

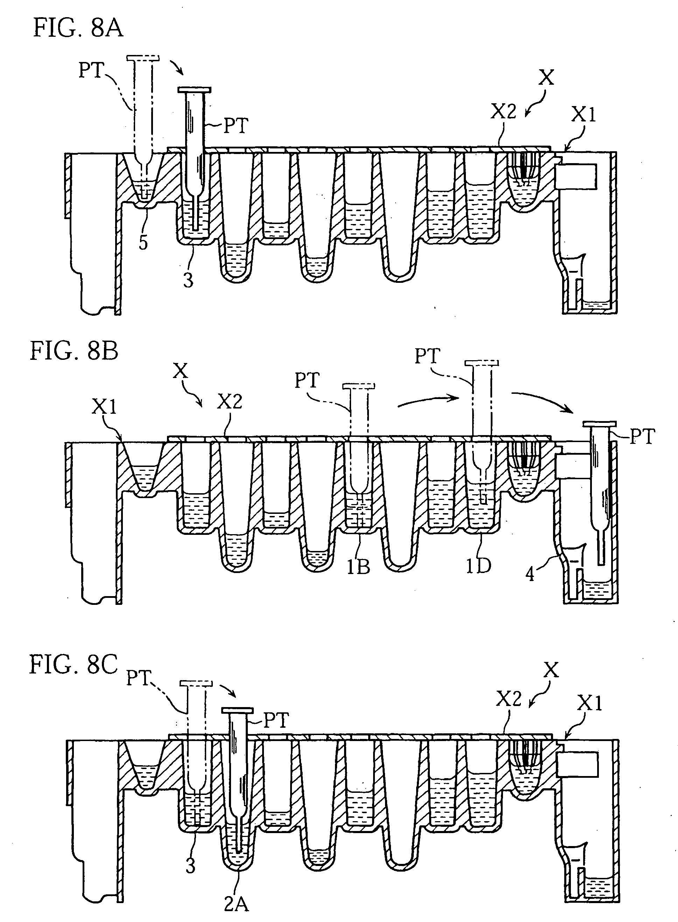

Next, as shown in Fig. 8A, the blood in the sample well 5 is dispensed into the adjustment well 3 for dilution of the blood by mixing with the liquid in the adjustment well 3. The blood is pipetted once by an amount of e.g. 28µL for dispensing into the adjustment well 3, and then the mixing of the liquid in the adjustment well 3 is performed by sucking and discharging the liquid five times each by an amount of e.g. 110µL. Subsequently, as shown in Fig. 8B, the pipette chip PT is cleaned by performing the same steps as those described referring to Fig. 7C. Finally, as shown in Fig. 8C, the diluted blood in the adjustment well 3 is dispensed into the reaction well 2A for mixing with the liquid in the reaction well 2A, whereby a final sample ready for hemoglobin concentration measurement is prepared. The diluted blood is pipetted once by an amount of e.g. 28µL for dispensing into the reaction well 2A, and then the mixing of the liquid in the reaction well 2A is performed by sucking and discharging the liquid five times each by an amount of e.g. 110µL.

In the absorbance measurement, a side of the reaction well 2A is irradiated with monochromatic light and the amount of light passing through the reaction well 2A is measured. The monochromatic light is selected according to the type of the hemoglobin measuring reagent. For example, light having a wavelength of 540nm may be used. The calculation of the hemoglobin concentration is performed by substituting a difference between a reference absorbance and the measured absorbance into a known equation. Based on the hemoglobin concentration obtained in this way, the hematocrit value can be calculated. However, the hematocrit value can also be calculated directly based on the measured absorbance, without calculating the hemoglobin concentration.

After completing the measurement of the hemoglobin concentration (hematocrit value), the above-described concentration measurement of the measurement target component is performed. The concentration measurement of the measurement target component includes sample adjustment, absorbance measurement, and concentration calculation.

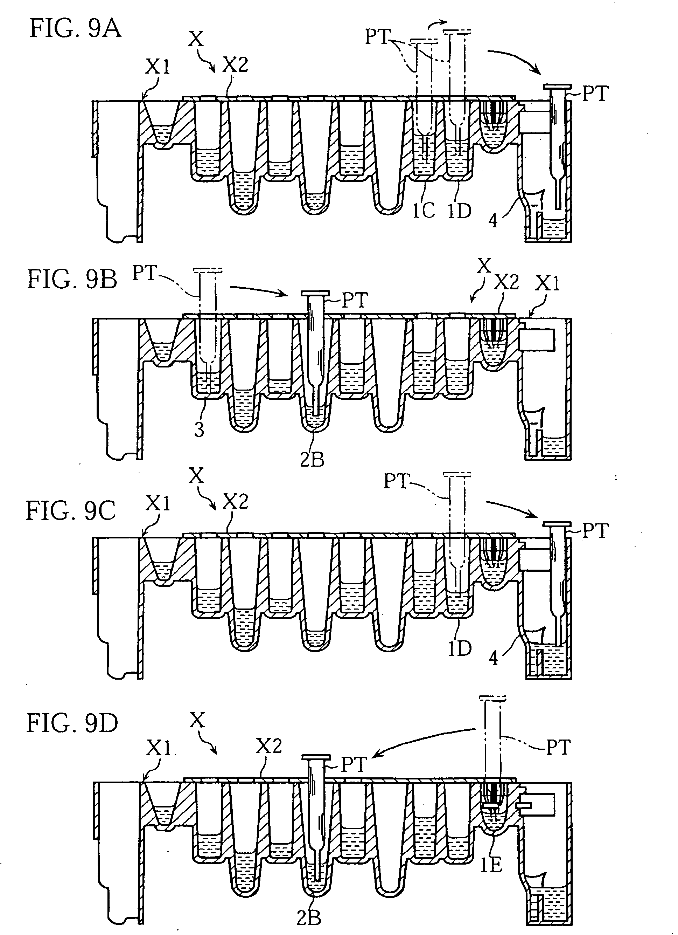

As shown in Fig. 9A, in the sample adjustment, the pipette chip PT is cleaned by performing the same steps as those described referring to Fig. 7C. Thereafter, as shown in Fig. 9B, the diluted blood in the adjustment well 3 is dispensed into the reaction well 2B for mixing. The diluted sample is pipetted once by an amount of e.g. 28µL for dispensing into the reaction well 2B, and then the liquid in the reaction well 2B is mixed by sucking and discharging the liquid five times each by an amount of e.g. 85µL.

Next, as shown in Fig. 9C, the pipette tip PT is cleaned using the distilled water in the storage well 1D. The cleaning of the pipette tip is performed by sucking and discharging the distilled water in the storage well 1D twice each by an amount of e.g. 110µL, followed by transferring the distilled water in the storage well 1D to the disposal well 4 by an amount of e.g. 110µL. Finally, as shown in Fig. 9D, the latex suspension in the storage well 1E is dispensed into the reaction well 2B for mixing with the liquid in the reaction well 2B. The latex suspension is pipetted once by an amount of e.g. 28.2µL for dispensing into the reaction well 2B, and then the liquid in the reaction well 2B is mixed by sucking and discharging of the liquid three times each by an amount of e.g. 110µL.

In the absorbance measurement, a side of the reaction well 2B is irradiated by monochromatic light and the amount of light passing through the reaction well 2B is measured. The monochromatic light is selected according to the measurement target component and the immune reactant held in the latex suspension. The calculation of the concentration is performed by substituting a difference between a reference absorbance and the measured absorbance into a known equation. The concentration of the measurement target component calculated in this way is corrected based on the hematocrit value which has been previously obtained.

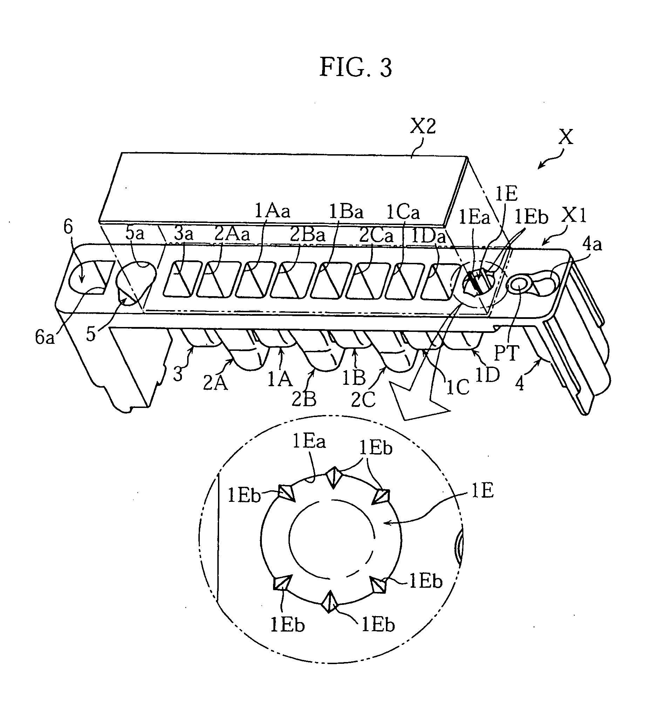

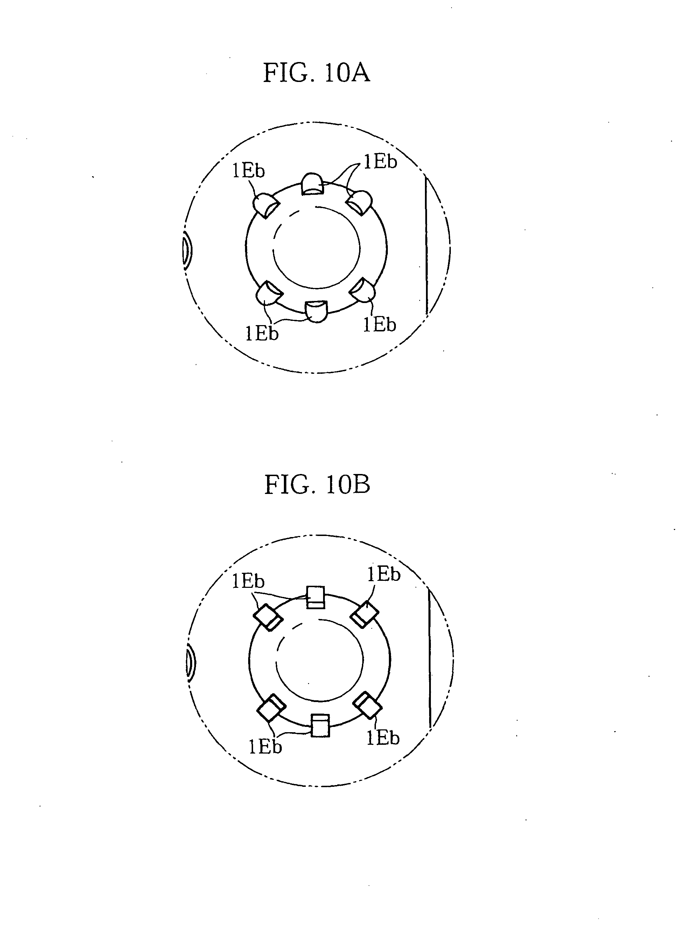

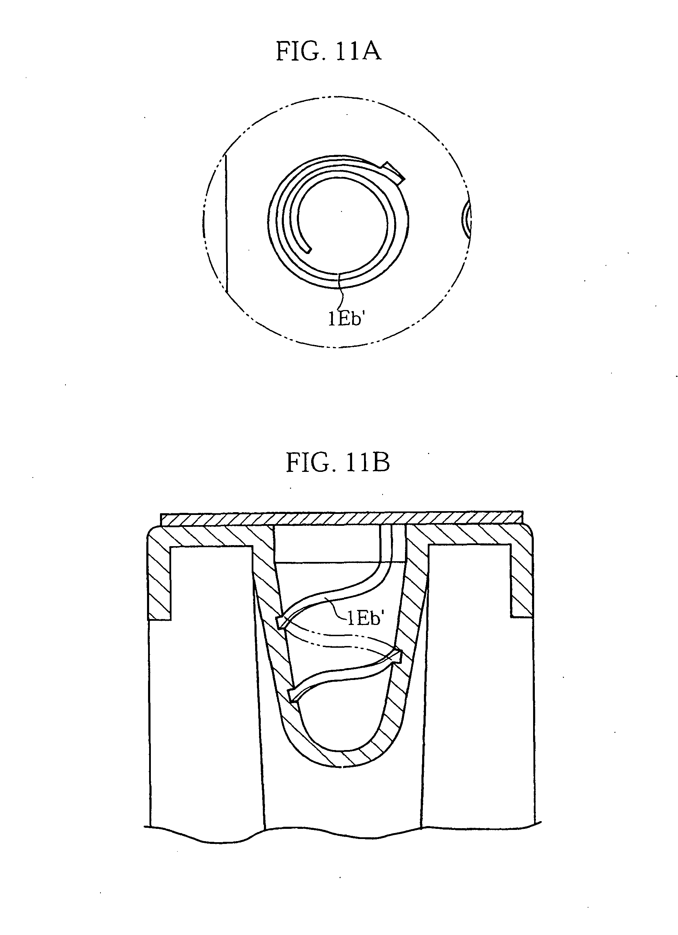

In the present embodiment, the storage well 1E alone is formed with the grooves 1Eb (see Fig. 3 and 4), which are V-shaped in section, as the adhering liquid mover. However, the present invention is not limited to such a structure. For example, in place of, or in addition to the storage well 1E, the other storage wells 1A-1D or the reaction wells 2A-2C may be provided with an adhering liquid mover. Further, the structure of the adhering liquid mover is not limited to the one shown in Figs. 3 and 4. The adhering liquid mover may be formed as grooves 1Eb which are semicircular in section as shown in Fig. 10B, or may be formed as grooves 1Eb which are rectangular in section as shown in Fig. 10B. The adhering liquid mover may also be formed as a groove 1Eb' extending spirally as shown in Figs. 11A and 11B, or a groove (not shown) extending obliquely. Of course, the adhering liquid mover may be formed as a projection.

The present invention is applicable not only to an example using blood as a sample, but also to a cartridge for analyzing other sample such as urine or saliva, or a liquid storage container for preserving liquids (including a sample).

## Claims

1. A liquid storage container comprising:
a receptacle (1 E) formed with an upper opening (1Ea), and a closure (X2) for closing the upper opening (1Ea); and
a liquid contained in the receptacle (1 E);
wherein the receptacle (1E) is provided with an adhering liquid mover (1 Eb; 1 Eb') for moving the liquid, which adheres on a peripheral portion of the upper opening (1Ea) or on an inner surface of the receptacle (1 E), toward a bottom of the receptacle,
wherein the closure (X2) comprises a sheet,
and wherein the adhering liquid mover (1 Eb; 1 Eb') comprises a notch formed on the inner surface of the receptacle in a manner such that a lower end of the adhering liquid mover is positioned below a surface of the liquid contained in the receptacle (1E).

2. The liquid storage container according to claim 1, wherein the notch (1 Eb; 1 Eb') comprises a groove which is V-shaped in section.

3. The liquid storage container according to claim 1, wherein the notch (1 Eb) extends linearly and vertically.

4. The liquid storage container according to claim 1, wherein the notch (1Eb') extends spirally.

5. The liquid storage container according to claim 1, wherein an upper end of the notch (1 Eb; 1 Eb') contacts the sheet (X2).

6. The liquid storage container according to claim 1, wherein the notch (1 Eb; 1 Eb') is formed integrally with the receptacle by resin molding.

7. A cartridge (X) comprising:
a liquid storage container (1 E) according to any of claims 1-6; and
at least one reaction well (2A-2C) including an upper opening (2Aa-2Ca) and providing a reacting field.

8. The cartridge according to claim 7, wherein the liquid comprises at least one of a reagent, a diluent, and a cleaning solution.

9. The cartridge according to claim 7, wherein the liquid comprises a reagent.

10. The cartridge according to claim 9, wherein the reagent is necessary for causing immune reaction.

11. The cartridge according to claim 10, wherein the reagent is made by dispersing an immune reactant, which reacts selectively with a specific component in a sample, in liquid as supported on solid particles.

12. The cartridge according to claim 7, further comprising an additional receptacle (1A-1 E) including an upper opening (1Aa-1Ea),
the sheet (X2) collectively covering the upper openings of the receptacles.

13. The cartridge according to claim 7, wherein the sheet (X2) covers the upper openings of the receptacle (1 E) and the reaction well (2A-2C).

14. The cartridge according to claim 7, wherein a notch (1 Eb; 1 Eb') is provided on the inner surface of the reaction well. (2A-2C) for moving liquid, which adheres on a peripheral portion of the upper opening (2Aa-2Ca) or on the inner surface of the reaction well, toward a bottom of the reaction well, the notch having a lower end positioned below a surface of the liquid when the reaction well contains a desired amount of the liquid in use.

15. The cartridge according to claim 14, wherein the notch (1 Eb; 1 Eb') of the reaction well (2A-2C) comprises a groove which is V-shaped in section.

16. The cartridge according to claim 14, wherein the notch (1 Eb) of the reaction well (2A-2C) extends linearly and vertically.

17. The cartridge according to claim 14, wherein the notch (1Eb') of the reaction well (2A-2C) extends spirally.

18. The cartridge according to claim 14, wherein an upper end of the notch (1 Eb; 1 Eb') contacts the sheet (X2).

## Patentansprüche

1. Flüssigkeitslagerbehälter, Folgendes umfassend:
einen Aufnahmebehälter (1 E), ausgebildet mit einer oberen Öffnung (1 Ea) und einem Verschluss (X2) zum Verschließen der oberen Öffnung (1 Ea); und
eine Flüssigkeit, die in dem Aufnahmebehälter (1 E) enthalten ist;
wobei der Aufnahmebehälter (1 E) mit einem anhaftenden Flüssigkeitsbeweger (1 Eb; 1 Eb') versehen ist, welcher an einem Umfangsabschnitt der oberen Öffnung (1 Ea) oder an einer inneren Oberfläche des Aufnahmebehälters (1 E) anhaftet, zum Bewegen der Flüssigkeit in dem Aufnahmebehälter nach unten,
wobei der Verschluss (X2) eine Platte umfasst,
und wobei der anhaftende Flüssigkeitsbeweger (1 Eb; 1 Eb') eine Kerbe aufweist, die derart auf der inneren Oberfläche des Aufnahmebehälters ausgebildet ist, dass ein unteres Ende des anhaftenden Flüssigkeitsbewegers unterhalb einer Oberfläche der im Aufnahmebehälter (1 E) enthaltenen Flüssigkeit liegt.

2. Flüssigkeitslagerbehälter nach Anspruch 1, wobei die Kerbe (1 Eb; 1 Eb') eine Nut mit einem V-Förmigen Querschnitt aufweist.

3. Flüssigkeitslagerbehälter nach Anspruch 1, wobei sich die Kerbe (1 Eb) linear und vertikal erstreckt.

4. Flüssigkeitslagerbehälter nach Anspruch 1, wobei sich die Kerbe (1 Eb') spiralförmig erstreckt.

5. Flüssigkeitsbehälter nach Anspruch 1, wobei ein oberes Ende der Kerbe (1 Eb; 1 Eb') die Platte (X2) berührt.

6. Flüssigkeitsbehälter nach Anspruch 1, wobei die Kerbe (1 Eb; 1 Eb') durch Harzgießen mit dem Aufnahmebehälter einstückig ausgebildet ist.

7. Kartusche (X), Folgendes umfassend:
einen Flüssigkeitslagerbehälter (1 E) nach einem der Ansprüche 1-6; und
wenigstens ein Reaktionsnäpfchen (2A-2C), das eine obere Öffnung (2Aa-2Ca) aufweist und ein Reaktionsfeld bereitstellt

8. Kartusche nach Anspruch 7, wobei die Flüssigkeit ein Reagens, ein Verdünnungsmittel und / oder eine Reinigungslösung aufweist.

9. Kartusche nach Anspruch 7, wobei die Flüssigkeit ein Reagens aufweist.

10. Kartusche nach Anspruch 9, wobei das Reagens zum Hervorrufen einer Immunreaktion erforderlich ist.

11. Kartusche nach Anspruch 10, wobei das Reagens durch Dispergieren eines Immunreaktionsmittels, welches selektiv mit einer bestimmten Komponente in einer Probe reagiert, in einer Flüssigkeit, die von Festpartikeln getragen wird, hergestellt wird.

12. Kartusche nach Anspruch 7, ferner umfassend einen zusätzlichen Aufnahmebehälter (1A-1 E) mit einer oberen Öffnung (1Aa-1 Ea),
wobei die Platte (X2) die oberen Öffnungen der Aufnahmebehälter gemeinsam abdeckt

13. Kartusche nach Anspruch 7, wobei die Platte (X2) die oberen Öffnungen des Aufnahmebehälters (1 E) und des Reaktionsnäpfchens (2A-2C) abdeckt.

14. Kartusche nach Anspruch 7, wobei eine Kerbe (1 Eb; 1 Eb') auf der inneren Oberfläche des Reaktionsnäpfchens (2A-2C) bereitgestellt ist, welche an einem Umfangsabschnitt der oberen Öffnung (2Aa-2Ca) oder an einer inneren Oberfläche des Reaktionsnäpfchens anhaftet, zum Bewegen von Flüssigkeit in Richtung des Bodens eines Reaktionsnäpfchens, wobei die Kerbe ein unteres Ende aufweist, das unterhalb einer Oberfläche der Flüssigkeit liegt, wenn das Reaktionsnäpfchen eine erwünschte Menge der verwendeten Flüssigkeit aufweist.

15. Kartusche nach Anspruch 14, wobei die Kerbe (1 Eb; 1 Eb') des Reaktionsnäpfchens (2A-2C) eine Nut mit einem V-förmigen Querschnitt aufweist.

16. Kartusche nach Anspruch 14, wobei sich die Kerbe (1 Eb) des Reaktionsnäpfchens (2A-2C) linear und vertikal erstreckt.

17. Kartusche nach Anspruch 14, wobei sich die Kerbe (1 Eb') des Reaktionsnäpfchens (2A-2C) spiralförmig erstreckt.

18. Kartusche nach Anspruch 14, wobei ein oberes Ende der Kerbe (1 Eb; 1 Eb') die Platte (X2) berührt.

## Revendications

1. Récipient de stockage de liquide comprenant :
un réceptacle (1E) formé avec une ouverture supérieure (1Ea) et une fermeture (X2) pour fermer l'ouverture supérieure (1Ea) ; et
un liquide confiné dans le réceptacle (1E) ;
dans lequel le réceptacle (1E) est pourvu d'un déplaceur de liquide adhérent (1Eb ; 1Eb') pour déplacer le liquide, qui adhère à une partie périphérique de l'ouverture supérieure (1Ea) ou à une surface interne du réceptacle (1E), vers le fond du réceptacle,
dans lequel la fermeture (X2) comprend une feuille et
dans lequel le déplaceur de liquide adhérent (1Eb ; 1Eb') comprend une encoche formée sur la surface interne du réceptacle de manière qu'une extrémité inférieure du déplaceur de liquide adhérent soit positionnée en dessous d'une surface du liquide confiné dans le réceptacle (1E).

2. Récipient de stockage selon la revendication 1, dans lequel l'encoche (1Eb ; 1Eb') comprend une rainure qui a une section en forme de V.

3. Récipient de stockage selon la revendication 1, dans lequel l'encoche (1Eb) s'étend verticalement en mode linéaire.

4. Récipient de stockage selon la revendication 1, dans lequel l'encoche (1Eb') s'étend en spirale.

5. Récipient de stockage selon la revendication 1, dans lequel une extrémité supérieure de l'encoche (1Eb ; 1Eb') vient en contact avec la feuille (X2).

6. Récipient de stockage selon la revendication 1, dans lequel l'encoche (1Eb ; 1Eb') est formée d'une seule pièce avec le réceptacle par moulage de résine.

7. Cartouche (X) comprenant :
un récipient de stockage de liquide (1E) selon l'une quelconque des revendications 1 à 6 ; et
au moins un puits réactionnel (2A-2C) comprenant une ouverture supérieure (2Aa-2Ca) et fournissant un champ de réaction.

8. Cartouche selon la revendication 7, dans laquelle le liquide comprend au moins l'un(e) ou l'autre d'un réactif, d'un diluant et d'une solution de nettoyage.

9. Cartouche selon la revendication 7, dans laquelle le liquide comprend un réactif.

10. Cartouche selon la revendication 9, dans laquelle le réactif est nécessaire pour provoquer une réaction immunitaire.

11. Cartouche selon la revendication 10, dans laquelle le réactif est préparé en dispersant un réactif immunitaire, qui réagit sélectivement avec un composant spécifique dans un échantillon, dans un liquide supporté par des particules solides.

12. Cartouche selon la revendication 7, comprenant en outre un réceptacle supplémentaire (1A-1E) comportant une ouverture supérieure (1Aa-1Ea),
la feuille (X2) couvrant collectivement les ouvertures supérieures des réceptacles.

13. Cartouche selon la revendication 7, dans laquelle la feuille (X2) couvre l'ouverture supérieure du réceptacle (1E) et du puits réactionnels (2A-2C).

14. Cartouche selon la revendication 7, dans laquelle une encoche (1Eb ; 1Eb') est ménagée sur la surface interne du puits réactionnel (2A-2C) pour déplacer le liquide, qui adhère à une partie périphérique de l'ouverture supérieure (2Aa-2Ca) ou sur la surface interne du puits réactionnel, vers le fond du puits réactionnel, l'encoche ayant une extrémité inférieure positionnée en dessous d'une surface du liquide lorsque le puits réactionnel contient une quantité souhaitée du liquide en service.

15. Cartouche selon la revendication 14, dans laquelle l'encoche (1Eb ; 1Eb') du puits réactionnel (2A-2C) comprend une rainure qui est en forme de V en coupe.

16. Cartouche selon la revendication 14, dans laquelle l'encoche (1Eb) du puits réactionnel (2A-2C) s'étend verticalement en mode linéaire.

17. Cartouche selon la revendication 14, dans laquelle l'encoche (1Eb') du puits réactionnel (2A-2C) s'étend en spirale.

18. Cartouche selon la revendication 14, dans laquelle une extrémité supérieure de l'encoche (1Eb ; 1Eb') vient en contact avec la feuille (X2).
